# EUROPEAN PATENT APPLICATION

(11) **EP 4 823 216 A1**
(43) Date of publication of application: **14.10.2026**
(21) Application number: 23960464.8
(22) Date of filing: 05.12.2023
(51) Int. Cl.: H04W 72/543

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: GUO, Yali, Dongguan, Guangdong 523860 (CN); GUO, Boren, Dongguan, Guangdong 523860 (CN)
(74) Representative: Taor, Simon Edward William
(86) International application number: PCT/CN2023/136509
(87) International publication number: WO 2025/118150

(57) **Abstract**

Provided are a wireless communication method and a communication device. The method comprises: a first device sends a first message to a second device, the first message comprising a first QoS parameter, and the first QoS parameter being used for controlling transmission of a data unit set on a first communication link. The first communication link is a direct communication link between a first terminal device and a second terminal device, or the first communication link is a communication link between the first terminal device and a non-3GPP device.

## Description

### TECHNICAL FIELD

The present disclosure relates to the field of communication technology, and more particularly, to a wireless communication method and a communication device.

### BACKGROUND

For some services (such as extended reality (XR) services), the service data is transmitted at a granularity of a data unit set (such as a protocol data unit set (PDU set)). For such services, how to ensure the transmission quality of the service data is a problem that needs to be solved.

### SUMMARY

The present disclosure provides a wireless communication method and a communication device. Various aspects of the present disclosure are described below.

In a first aspect, there is provided a wireless communication method. The method includes that: a first device sends a first message to a second device, where the first message includes a first quality of service (QoS) parameter, and the first QoS parameter is used for controlling transmission of a data unit set on a first communication link. Herein, the first communication link is a direct communication link between a first terminal device and a second terminal device; or, the first communication link is a communication link between the first terminal device and a non-third generation partnership project (3GPP) device.

In a second aspect, there is provided a wireless communication method. The method includes that: a second device receives a first message from a first device, where the first message includes a first quality of service (QoS) parameter, and the first QoS parameter is used for controlling transmission of a data unit set on a first communication link. Herein, the first communication link is a direct communication link between a first terminal device and a second terminal device; or, the first communication link is a communication link between the first terminal device and a non-third generation partnership project (3GPP) device.

In a third aspect, there is provided a communication device. The communication device is a first device, and the communication device includes a first communication module. The first communication module is configured to send a first message to a second device, the first message includes a first quality of service (QoS) parameter, and the first QoS parameter is used for controlling transmission of a data unit set on a first communication link. Herein, the first communication link is a direct communication link between a first terminal device and a second terminal device; or, the first communication link is a communication link between the first terminal device and a non-third generation partnership project (3GPP) device.

In a fourth aspect, there is provided a communication device. The communication device is a second device, and the communication device includes a first communication module. The first communication module is configured to receive a first message from a first device, the first message includes a first quality of service (QoS) parameter, and the first QoS parameter is used for controlling transmission of a data unit set on a first communication link. Herein, the first communication link is a direct communication link between a first terminal device and a second terminal device; or, the first communication link is a communication link between the first terminal device and a non-third generation partnership project (3GPP) device.

In a fifth aspect, there is provided a communication device. The communication device includes a transceiver, a memory, and a processor, where the memory is configured to store a program therein, and the processor is configured to call and run the program in the memory and control the transceiver to receive or transmit a signal to enable the communication device to implement the method according to any one of the aforementioned first and second aspects.

In a sixth aspect, there is provided a device including a processor, and the processor is configured to call and run a program from a memory, to enable the device to implement the method according to any one of the aforementioned first and second aspects.

In a seventh aspect, there is provided a chip including a processor, and the processor is configured to call and run a program from a memory, to enable a device installed with the chip to implement the method according to the aforementioned first and second aspects.

In an eighth aspect, there is provided a computer-readable storage medium having stored a program thereon, and the program enables a computer to implement the method according to the aforementioned first and second aspects.

In a ninth aspect, there is provided a computer program product, which includes a program, and the program enables a computer to implement the method according to any one of the aforementioned first and second aspects.

In a tenth aspect, there is provided a computer program that enables a computer to implement the method of any one of the aforementioned first and second aspects.

In the embodiments of the present disclosure, the first QoS parameter (for controlling the transmission of the data unit set) is introduced for the first communication link (which may be the direct communication link between the first terminal device and the second terminal device, or may be the communication link between the first terminal device and the non-3GPP device), thereby ensuring the transmission quality of the service data at the granularity of the data unit set.

### BRIEF DESCRIPTION OF THE DRAWINGS

FIG. 1 is an example diagram of a system architecture of a wireless communication system to which an embodiment of the present disclosure is applicable.
FIG. 2 is a schematic diagram of a core network architecture of a fifth generation (5G) communication system.
FIG. 3 is schematic diagram of another core network architecture of a 5G communication system.
FIG. 4 is a schematic diagram of a communication scenario to which an embodiment of the present disclosure is applicable.
FIG. 5 is a schematic diagram of another communication scenario to which an embodiment of the present disclosure is applicable.
FIG. 6 is a schematic diagram of yet another communication scenario to which an embodiment of the present disclosure is applicable.
FIG. 7 is a schematic flowchart of a wireless communication method according to an embodiment of the present disclosure.
FIG. 8 is a schematic flowchart of a wireless communication method according to another embodiment of the present disclosure.
FIG. 9 is a schematic flowchart of a wireless communication method according to another embodiment of the present disclosure.
FIG. 10 is a schematic flowchart of a wireless communication method according to another embodiment of the present disclosure.
FIG. 11 is a schematic flowchart of a wireless communication method according to another embodiment of the present disclosure.
FIG. 12 is a schematic flowchart of a wireless communication method according to another embodiment of the present disclosure.
FIG. 13 is a schematic flowchart of a wireless communication method according to another embodiment of the present disclosure.
FIG. 14 is a schematic flowchart of a wireless communication method according to another embodiment of the present disclosure.
FIG. 15 is a schematic flowchart of a wireless communication method according to another embodiment of the present disclosure.
FIG. 16 is a schematic flowchart of a wireless communication method according to another embodiment of the present disclosure.
FIG. 17 is a schematic flowchart of a wireless communication method according to another embodiment of the present disclosure.
FIG. 18 is a schematic structural diagram of a communication device according to an embodiment of the present disclosure.
FIG. 19 is a schematic structural diagram of a communication device according to another embodiment of the present disclosure.
FIG. 20 is a schematic diagram of a device to which an embodiment of the present disclosure is applicable.

### DETAILED DESCRIPTION

Hereinafter, the technical solutions in the present disclosure are described with reference to the accompanying drawings.

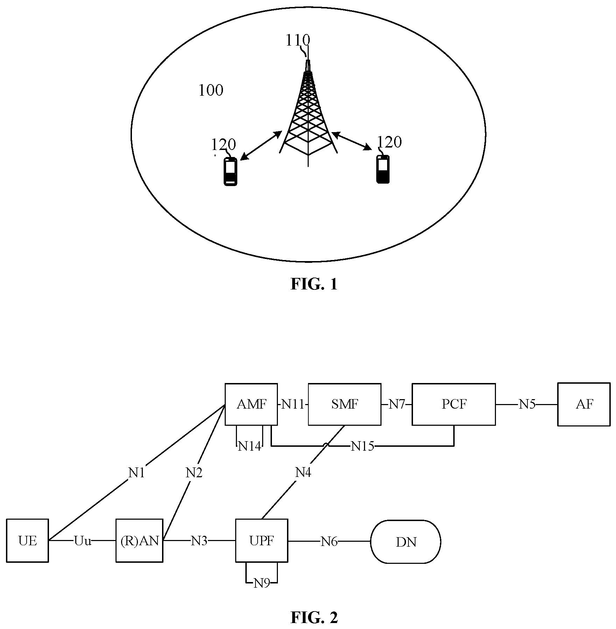

FIG. 1 shows an example diagram of a system architecture of a wireless communication system 100 to which an embodiment of the present disclosure is applicable. The wireless communication system 100 may include a network device 110 and a terminal device 120. The network device 110 may be a device that communicates with the terminal device 120. The network device 110 may provide network coverage for a specific geographic area and may communicate with the terminal device(s) 120 located within the coverage region. The terminal device 120 may access a network (e.g., a wireless network) through the network device 110. Optionally, the wireless communication system 100 may further include other network entities such as a network controller and a mobile management entity, which are not limited in the embodiments of the present disclosure.

It should be understood that the technical solutions of the embodiments of the present disclosure can be applied to various communication systems, such as a fifth generation (5G) system or a new radio (NR) system, a long term evolution (LTE) system, an LTE frequency division duplex (FDD) system, an LTE time division duplex (TDD) system, and the like. The technical solutions provided by the present disclosure can also be applied to future communication systems, such as a sixth generation mobile communication system, a satellite communication system, and the like.

The terminal device in the embodiments of the present disclosure may also be referred to as a user equipment (UE), an access terminal, a user unit, a user station, a mobile site, a mobile station (MS), a mobile terminal (MT), a remote station, a remote terminal, a mobile device, a user terminal, a terminal, a wireless communication device, a user agent, or a user device. The terminal device in the embodiments of the present disclosure may be the device that provides voice and/or data connectivity to a user, and may be used to connect people, objects, and machines, such as a handheld device having a wireless connection function, a vehicle-mounted device, or the like. The terminal device in the embodiments of the present disclosure may be a mobile phone, a Pad, a notebook computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, or the like. Optionally, the terminal device may be used to act as a base station. For example, the terminal device may act as a scheduling entity that provides sidelink signal(s) between terminal devices in a vehicle to everything (V2X) or a device to device (D2D), etc. For example, the cellular phone and the vehicle may communicate with each other by using the sidelink signal(s). The communication between the cellular phone and the smart home device may be performed without relaying communication signal(s) through the base station.

The network device in the embodiments of the present disclosure may be a device for communicating with the terminal device. The network device may be, for example, an access network device or a wireless access network device. For example, the network device may be a base station. The base station may broadly cover various names of the following: a Node B (NodeB), an evolved NodeB (eNB), a next generation NodeB (gNB), a relay station, an access point, a transmitting and receiving point (TRP), a transmitting point (TP), a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), a positioning node, and the like. The base station may be a macro base station, a micro base station, a relay node, a donor node, and the like, or a combination thereof.

The communication between the terminal devices may be performed through a sidelink. The sidelink communication may also be referred to as proximity services (ProSe) communication, unilateral communication, side link communication, D2D communication.

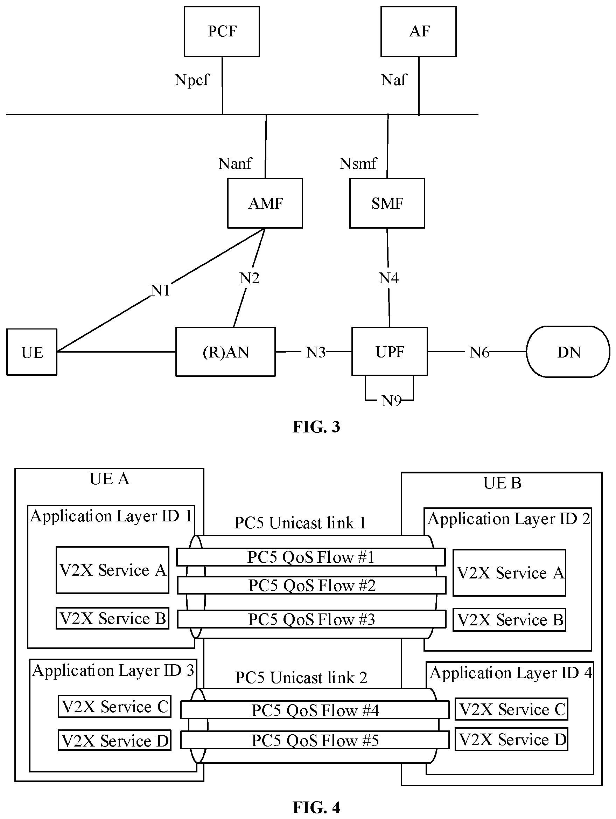

FIGS. 2 and 3 are architectural diagrams of a 5G communication system. As shown in FIGS. 2 and 3, core network elements are connected pairwise via specified interfaces, and the core network elements may interact with each other by invoking services provided by the network elements. It should be understood that FIGS. 2 and 3 are only examples, and the embodiments of the present disclosure do not limit the interface manner or service invocation mode adopted between the network elements. In the network architecture shown in FIGS. 2 and 3, the UE may perform an access stratum connection with an access node (AN) via an air interface (Uu interface). After performing the access stratum connection, the UE may interface the access stratum message(s) with the AN, and perform wireless data transmission. The UE may perform a non-access stratum (NAS) connection with an access and mobility management function (AMF) via a N1 interface, for the interaction of the NAS message(s). In addition to for the mobility management of the UE, the AMF may also be responsible for forwarding session management-related messages between the UE and a session management function (SMF). A policy control function (PCF) may be responsible for formulating policies related to the mobility management, session management, charging, and the like of the UE. A user plane function (UPF) may perform data transmission with the external data network via a N6 interface, and perform data transmission with the AN via a N3 interface. After the UE accesses the 5G network via the Uu interface, the UE may transmit the service data through the 5G network. The SMF may control the data transmission of a QoS flow between the UE and the UPF based on QoS parameter(s) of the QoS flow.

As shown in FIG. 4, two UEs (i.e., the UE A and UE B in FIG. 4) with the proximity-based services (prose) capability may communicate directly via a PC5 interface. When the two UEs transmit the service data through a direct communication link, the communication quality of the PC5 interface may be controlled through the PC5 QoS flow and the corresponding QoS parameter(s).

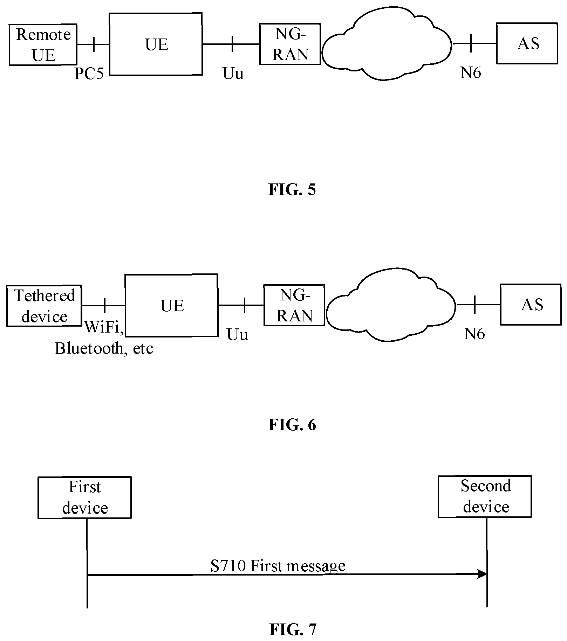

As shown in FIG. 5, when the UE can be connected to an external application server (AS) or data network through the 5G network, the UE may act as a relay UE. Another remote UE with the prose communication capability may establish a direct communication link with the relay UE via the PC5 interface, and interact with the external application server through the PDU session established between the relay UE and the 5G network.

As shown in FIG. 6, the UE may also establish a direct connection with a non-3GPP device through a non-3GPP protocol (e.g., Bluetooth, wireless fidelity (WiFi), etc.). The non-3GPP device may be, for example, a tethered device such as a headphone or a watch. When the UE can be connected to the external application server or data network through the 5G network, the non-3GPP device may interact with the external network through the PDU session established between the UE and the 5G network.

With the development of technology, XR services are gradually emerging. The XR services may include one or more of the following: augmented reality (AR), virtual reality (VR), and cloud gaming. For the XR services, application layer data that has undergone specific coding and compression is typically transmitted. During the coding process, the media data may be split into multiple data unit sets (e.g., PDU sets), and each data unit set may be coded independently. For example, an image of 100*100 pixels may be split into 10 image blocks of 100*10 pixels, and then each image block may be coded independently. After receiving the image blocks, the UE may decode each image block individually, and then combine to form the whole image. For the XR services, the QoS control at the granularity of the data unit set (e.g., the PDU set) can effectively improve user experience. The QoS parameter for the QoS control of the data unit set (e.g., the PDU set) may include, for example, a PDU set delay budget (PSDB) and/or a PDU set error rate (PSER), etc.

In the related technologies, when the terminal device accesses the 3GPP network vais the Uu interface to transmit the XR service(s), the QoS parameter of the QoS flow determined by the SMF may include a parameter for controlling the transmission of the data unit set (such as the PDU set), such as a PSDB, a PSER, etc. The usage of the QoS parameter can ensure the transmission quality of the XR service data. However, since the QoS parameter can only be used to control the data transmission between the terminal device and the UPF, the transmission quality of the XR service cannot be ensured in some scenarios. For example, in the scenario shown in FIG. 4, the UE A communicates directly with the UE B via the PC5 interface. If the PC5 interface is used to transmit the service data of the XR service, the transmission quality of the service data cannot be controlled on the PC5 interface between the UE A and the UE B. As another example, in the scenario shown in FIG. 5, the remote UE interacts with the external network through the relay UE and the core network. If the service data of the XR service is transmitted between the remote UE and the external network, the transmission quality of the service data cannot be controlled on the PC5 interface between the remote UE and the relay UE. As yet another example, in the scenario shown in FIG. 6, the tethered device interacts with the external network through the UE and the core network. If the service data of the XR service is transmitted between the tethered device and the UE, the transmission quality of the service data cannot be controlled on the non-3GPP interface (e.g., Bluetooth, WiFi) between the tethered device and the UE. It should be understood that the XR service is only taken as an example for description herein, and the embodiments of the present disclosure can be applied to other scenarios in which the data transmission is performed at the granularity of the data unit set.

In summary, how to ensure the transmission quality of the service data at the granularity of data unit set (such as the PDU set) is a problem that needs to be solved.

FIG. 7 shows a schematic flowchart of a wireless communication method according to an embodiment of the present disclosure. Referring to FIG. 7, at block S710, a first device sends a first message to a second device.

The first message includes a first QoS parameter. The first QoS parameter is associated with transmission of a data unit set. In some implementations, the data unit set may refer to a PDU set. Alternatively, in some other implementations, the data unit set may also refer to other types of data unit sets that may appear in the future.

The first QoS parameter may be a QoS parameter of a first QoS flow. The first QoS flow may be used to carry service data of a first service. The first service may be any type of service that is transmitted at the granularity of the data unit set. In some implementations, the first service may be an XR service. For example, the first service may be one or more of the following: an AR service, a VR service, and a cloud gaming service.

The first QoS parameter may be associated with the transmission of the data unit set on a first communication link.

In some implementations, the first communication link may be (or include), for example, a direct communication link between the first terminal device and the second terminal device. The direct communication link may refer to a communication link established between the first terminal device and the second terminal device based on the PC5 interface. Thus, the first QoS parameter may be associated with the transmission of the data unit set on the PC5 interface. The implementation introduces the first QoS parameter (used for controlling the transmission of the data unit set) for the direct communication link (or the PC5 interface) between the terminal devices, which contributes to improving the transmission quality of the specific service (i.e., the service whose data transmission is performed at the granularity of the data unit set, such as the XR service) on the direct communication link (or the PC5 interface).

In some implementations, the first communication link may also be (or include) a communication link (or direct communication link) between the first terminal device and the non-3GPP device. The first terminal device and the non-3GPP device may be communicatively connected through Bluetooth, WiFi, or the like. The non-3GPP device may be, for example, a tethered device such as a headphone or a watch. The implementation introduces the first QoS parameter (used for controlling the transmission of the data unit set) to a communication link based on a non-3GPP protocol, which contributes to improving the transmission quality of the specific service (i.e., the service whose data transmission is performed at the granularity of the data unit set, such as the XR service) on such communication link.

In some implementations, the association between the first QoS parameter and the transmission of the data unit set on the first communication link may include that: the first QoS parameter may be used for controlling the transmission of the data unit set on the first communication link. Alternatively, the association between the first QoS parameter and the transmission of the data unit set on the first communication link may include that: the first QoS parameter may indicate a QoS requirement or a QoS expectation for the data unit set on the first communication link.

For example, the first QoS parameter may be used for controlling a transmission delay of the data unit set on the first communication link. Alternatively, the first QoS parameter may be used to indicate a transmission latency requirement for the data unit set on the first communication link. Taking the data unit set to be the PDU set as an example, the first QoS parameter may include a PSDB.

For another example, the first QoS parameter may be used for controlling the transmission error rate of the data unit set on the first communication link. Alternatively, the first QoS parameter may be used to indicate a transmission error rate requirement for the data unit set on the first communication link. Taking the data unit set to be the PDU set as an example, the first QoS parameter may include a PSER.

FIG. 7 is described from the perspective of the communication between the first device and the second device. The types of the first device and the second device are related to the actual application scenario, which are not specifically limited in the embodiments of the present disclosure.

In some implementations, in the communication scenario as shown in FIG. 4, the first device and the second device may be a first terminal device and a second terminal device, respectively. Furthermore, the first message that is interacted between the first device and the second device may be a message transmitted between the terminal devices via the PC5 interface.

In some implementations, in the communication scenario shown in FIG. 5 or FIG. 6, the first device and the second device may be a first core network element (e.g., the SMF) and the first terminal device, respectively. Furthermore, the first message may be a communication message sent by the core network to the terminal device.

In some implementations, in the communication scenario as shown in FIG. 5 or FIG. 6, the first device and the second device may be a second core network element (e.g., the PCF) and the first core network element (e.g., the SMF), respectively. The first message may be a communication message between the core network elements.

In some implementations, in the communication scenario shown in FIG. 5 or FIG. 6, the first device and the second device are the first terminal device and the second core network element (e.g., the PCF), respectively. The first message may be a communication message sent by the terminal device to the core network.

For ease of understanding, the technical solutions shown in FIG. 7 are described in more detail below with reference to specific embodiments.

### Embodiment 1

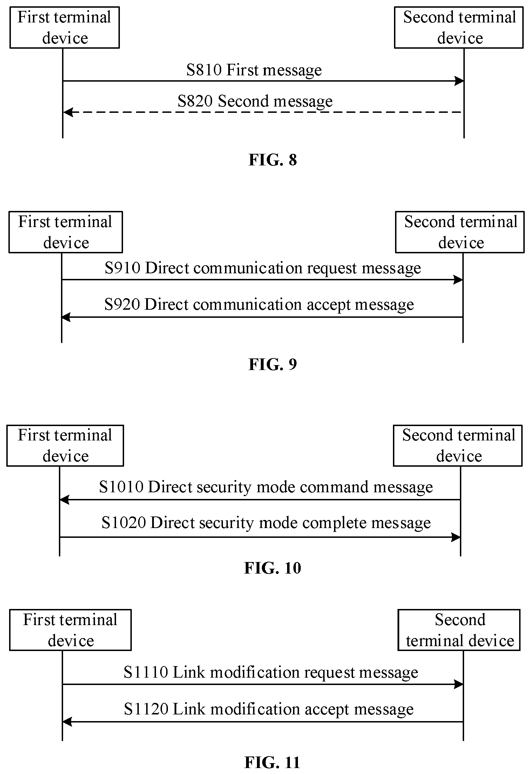

Referring to FIG. 8, in the embodiment, a first terminal device sends a first message to a second terminal device (at block S810). The first message includes a first QoS parameter. The first QoS parameter is used for controlling transmission of a data unit set on a direct communication link (or a PC5 interface, a PC5 link) between the first terminal device and the second terminal device. The first QoS parameter may include, for example, a PSDB and/or a PSER, etc.

In some implementations, the first QoS parameter may be a QoS parameter of a first QoS flow (which may be a PC5 QoS flow). The first message may further carry one or more of the following: identification information of the first QoS flow, identification information of the second terminal device, and service information.

After the first terminal device sends the first message to the second terminal device, in some implementations, referring to FIG. 8, the second terminal device may further send a second message to the first terminal device (at block S820). The second message may include a second QoS parameter acceptable to the second terminal device. The second QoS parameter may be used for controlling the transmission of the data unit set on the direct communication link. The second QoS parameter may include, for example, identification information of a QoS flow acceptable to the second terminal device, and/or, a QoS parameter (e.g., the PSDB, PSER, etc.) corresponding to the QoS flow.

In the embodiment 1, the QoS parameter (e.g., the PSDB, PSER, etc.) for the QoS control at the granularity of the data unit set (e.g., the PDU set) may be interacted between the first terminal device and the second terminal device. Therefore, the first terminal device and the second terminal device may schedule radio resources based on the QoS parameter at the data unit set level, thereby ensuring the communication quality of the direct communication link.

The aforementioned first message may be any type of communication message transmitted between the first terminal device and the second terminal device. Hereinafter, with reference to FIGS. 9 to 11, the type(s) of the first message and/or the second message are described in detail.

In some implementations, the first message may be the message transmitted between the first terminal device and the second terminal device during the establishment process of the direct communication link. For example, as shown in FIG. 9, the first message may be a direct communication request message (at block S910). That is, the first terminal device may carry the first QoS parameter in the direct communication request message. The direct communication request message may also be referred to as a direct communication link establishment request message. After receiving the direct communication request message, in some implementations, the second terminal device may send a direct security mode command message or a direct communication accept message to the first terminal device (at block S920).

Optionally, in the implementation corresponding to FIG. 9, the aforementioned second message may be the direct communication accept message. That is, the first terminal device may carry the first QoS parameter through the direct communication request message. Accordingly, the second terminal device may carry the second QoS parameter acceptable to the second terminal device through the direct communication accept message.

In some implementations, the first message may be the message transmitted between the first terminal device and the second terminal device during a security establishment process. For example, as shown in FIG. 10, the first terminal device may firstly receive the direct security mode command message sent by the second terminal device (at block S1010). After receiving the direct security mode command message, in some implementations, the first terminal device may send a direct security mode complete message to the second terminal device (at block S1020). The direct security mode complete message may correspond to the aforementioned first message, and the direct security mode complete message may carry the aforementioned first QoS parameter.

Optionally, in the implementation corresponding to FIG. 10, the aforementioned second message may be the direct communication accept message (not shown in FIG. 10). That is, the first terminal device may carry the first QoS parameter through the direct security mode complete message. Accordingly, the second terminal device may carry the second QoS parameter acceptable to the second terminal device through the direct communication accept message.

In some implementations, the first message may be the message transmitted between the first terminal device and the second terminal device during a link modification process. For example, as shown in FIG. 11, the first terminal device may send a link modification request message to the second terminal device (at block S1110). Furthermore, in some implementations, the first terminal device may receive a link modification accept message sent by the second terminal device (at block S1120).

Optionally, in the implementation corresponding to FIG. 11, the aforementioned second message may be a link modification accept message sent by the second terminal device. That is, the first terminal device may carry the first QoS parameter through the link modification request message. Accordingly, the second terminal device may carry the second QoS parameter acceptable to the second terminal device through the link modification accept message.

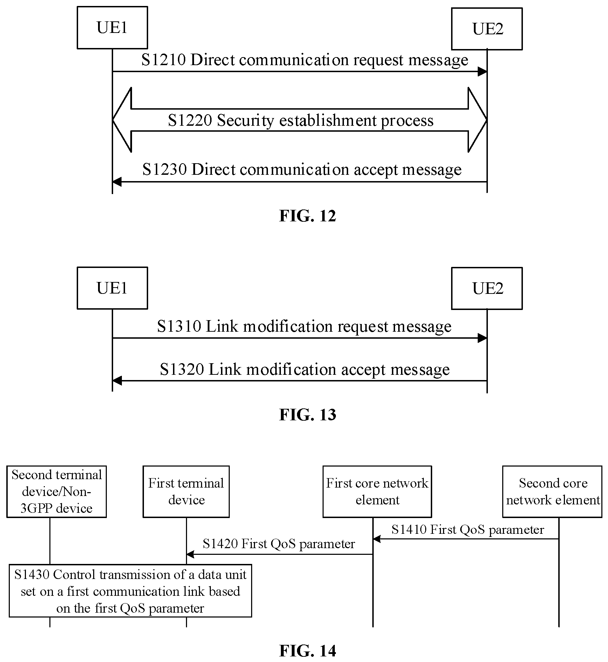

The embodiment 1 may be described in more detail below with reference to specific examples. It should be noted that the examples shown in FIGS. 12 and 13 can be applied to the communication scenario shown in FIG. 4 or FIG. 5 mentioned above. In the examples of FIGS. 12 and 13, a UE 1 corresponds to the first terminal device in the foregoing, and a UE 2 corresponds to the second terminal device in the foregoing. It should be understood that the examples of FIGS. 12 and 13 are merely intended to assist those skilled in the art in understanding the embodiments of the present disclosure, and are not intended to limit the embodiments of the present disclosure to specific numerical values or specific scenarios illustrated. It will be apparent to those skilled in the art that various equivalent modifications or variations may be made from the examples given in FIGS. 12 and 13, and such modifications or variations shall also fall within the scope of the embodiments of the present disclosure.

In the example, the QoS control manner based on the PDU set is added to the direct communication link (or the PC5 interface) between the UE1 and the UE2. Specifically, the UE 1 sends QoS flow information to the UE 2, and the QoS flow information includes the QoS parameter (such as the PSDB, PSER, etc.) for controlling the QoS flow based on the PDU set granularity. The UE 2 feeds back the acceptable QoS flow information to the UE 1.

FIG. 12 shows a PC5 link establishment procedure provided in the example. Referring to FIG. 12, at block S1210, the UE 1 may send a direct communication request message. The message may directly carry identification information of the UE 2 or carry the service information. In one manner, the UE 1 may carry QoS flow information in the message. The QoS flow information may include QoS flow identification (i.e., PC5 QoS flow identification) on the direct communication link, as well as a QoS parameter corresponding to the QoS flow. The QoS parameter may include the parameter(s) for controlling the PDU set, such as the PSDB, PSER, and the like.

At block S1220, if the direct communication request message includes the identification information of the UE 2, or if the UE 2 is interested in the service information carried in the message, the UE 2 and the UE 1 may perform the security establishment procedure. Specifically, the UE 2 may send a direct link security mode command message to the UE 1, and the UE 1 replies to the UE 2 with a direct link security mode complete message. In another manner (as an alternative to the manner in the operation S1210), the UE 1 may carry the QoS flow information in the direct link security mode complete message. The QoS flow information may include QoS flow identification (i.e., PC5 QoS flow identification) on the direct communication link, as well as a QoS parameter corresponding to the QoS flow. The QoS parameter may include the parameter(s) for controlling the PDU set, such as the PSDB, PSER, and the like.

At block S1230, after completing the security establishment procedure with the UE 1, the UE 2 may send a direct communication accept message to the UE 1. The message includes QoS flow information acceptable to the UE 2. For example, the QoS flow information may include QoS flow identification acceptable to the UE 2, and may also include a QoS parameter corresponding to the QoS flow. The QoS parameter may include the parameter(s) for controlling the PDU set, such as the PSDB, PSER, and the like.

FIG. 13 shows a PC5 link modification procedure provided in the example. Referring to FIG. 13, at block S1310, if the UE 1 determines to add a QoS flow to an established PC5 link or to modify a QoS parameter of the QoS flow in the PC5 link, the UE 1 may send a link modification request message. The message carries the QoS flow information that needs to be newly added or the QoS flow information that needs to be modified. The QoS flow information may include the QoS flow identification (i.e., the PC5 QoS flow identification) on the direct communication link, as well as a QoS parameter corresponding to the QoS flow. The QoS parameters may include the parameter(s) for controlling the PDU set, such as the PSDB, PSER, and the like.

At block S1320, the UE 2 may reply to the UE 1 with a direct link modification accept message. The message includes QoS flow information acceptable to the UE 2. The QoS flow information may include, for example, QoS flow identification acceptable to the UE 2, and may also include a QoS parameter corresponding to the QoS flow. The QoS parameter may include the parameter(s) for controlling the PDU set, such as the PSDB, PSER, and the like.

In the embodiment, the QoS parameter (such as the PSDB, PSER, etc.) for the control based on the PDU set granularity may be interacted between the UE1 and the UE2. Therefore, the direct communication link between the UE1 and the UE2 can be controlled based on the QoS parameter at the PDU set level. For example, the access stratum of the UE1 and the UE2 may schedule the radio resources based on the QoS parameter at the PDU set level, thereby ensuring the communication quality of the direct communication link.

### Embodiment 2

In some communication scenarios (such as the communication scenarios shown in FIG. 5 or FIG. 6), the data unit set needs to be transmitted between the second terminal device (or the non-3GPP device) and the UPF in the core network (or the external application server of the core network). Furthermore, the transmission of the data unit set between the second terminal device (or the non-3GPP device) and the UPF needs to pass through the first terminal device; that is, the first terminal device is the relay device on the transmission link for the data unit set. In such scenario, in order to be able to efficiently control the transmission quality of the data unit set on the communication link between the first terminal device and the second terminal device (or the non-3GPP device), it is necessary to introduce the first QoS parameter (such as the PSDB and/or PSER, etc.). In the embodiment 2, the first QoS parameter may not be determined through the interaction between the first terminal device and the second terminal device (or the non-3GPP device), but may be determined by the core network element and delivered to the first terminal device. The embodiment 2 may be described in detail below with reference to FIG. 14.

Referring to FIG. 14, the second core network element may send the first QoS parameter to the first core network element (at block S1410). Taking the 5G network as an example, the first core network element may be, for example, the SMF; and the second core network element may be, for example, the PCF. The first QoS parameter is used for controlling the transmission of the data unit set on the communication link between the first terminal device and the second terminal device (or the non-3GPP device). The first QoS parameter may include, for example, information such as the PSDB and/or PSER, etc.

After receiving the first QoS parameter, in some implementations, the first core network element may send the first QoS parameter to the first terminal device (at block S1420). The first QoS parameter may be included in a QoS rule and delivered to the first terminal device through the QoS rule. Alternatively, the first QoS parameter may be included in the QoS parameter of the QoS flow and delivered to the first terminal device through the QoS parameter of the QoS flow. The aforementioned QoS rule or the QoS parameter of the QoS flow may be carried in a PDU session establishment complete message, a PDU session modification command, or a PDU session modification response message.

After receiving the first QoS parameter, in some implementations, the first terminal device may control the transmission of the data unit set on the first communication link (the communication link between the first terminal device and the second terminal device or the non-3GPP device) based on the first QoS parameter (at block S1430). For example, if the first communication link is the communication link between the first terminal device (the relay terminal device) and the second terminal device (the remote terminal device), the first terminal device and the second terminal device may schedule the radio resources on the first communication link based on the first QoS parameter, thereby ensuring the communication quality of the first communication link. For another example, if the first communication link is the communication link between the first terminal device and the non-3GPP device, the first communication device and the non-3GPP device may perform the QoS control by using a non-3GPP protocol (such as a WiFi protocol).

In some implementations, before performing the operation S1410, the second core network element (e.g., the PCF) may receive a third message (not shown in FIG. 14). The third message is used to request a fourth QoS parameter. The fourth QoS parameter is used for controlling the transmission of the data unit set on a third communication link. The third communication link includes the first communication link and the second communication link mentioned above. For example, the third communication link is the communication link between the second terminal device (or the non-3GPP device) and the UPF.

The embodiment of the present disclosure does not specifically limit the requester of the fourth QoS parameter. In some implementations, the fourth QoS parameter may be a QoS parameter requested by an application function (AF). For example, the AF may directly request the fourth QoS parameter from the second core network element. Alternatively, the AF may request the fourth QoS parameter from the PCF through a network exposure function (NEF).

Alternatively, in some implementations, the fourth QoS parameter may be a QoS parameter requested by the first terminal device. For example, the first terminal device may request the fourth QoS parameter from the first core network element (e.g., the SMF) through a session establishment request message, and forward the fourth QoS parameter to the second core network element (e.g., the PCF) through the first core network element. For another example, the first terminal device may request the fourth QoS parameter from the first core network element (e.g., the SMF) through a session modification request message, and forward the fourth QoS parameter to the second core network element (e.g., the PCF) through the first core network element.

In addition to carrying the fourth QoS parameter, in some implementations, the aforementioned third message may further carry information of the second terminal device or the non-3GPP device. The information of the second terminal device may include, for example, one or more of the following: identification information of the second terminal device, and first indication information (for indicating that the fourth QoS parameter is the QoS parameter requested for the second terminal device). The information of the non-3GPP device may include, for example, one or more of the following: identification information of the non-3GPP device, and first indication information (for indicating that the fourth QoS parameter is the QoS parameter requested for the non-3GPP device).

In some implementations, after receiving the fourth QoS parameter, the second core network element may determine the first QoS parameter and/or the third QoS parameter based on the fourth QoS parameter. That is, the second core network element may split the fourth QoS parameter into two parts, namely, the first QoS parameter and the third QoS parameter. The first QoS parameter is used for controlling the transmission of the data unit set on the first communication link (the communication link between the first terminal device and the second terminal device or the non-3GPP device), and the third QoS parameter is used for controlling the transmission of the data unit set on the second communication link (the communication link between the first terminal device and the UPF). For example, the fourth QoS parameter includes the PSDB, where PSDB = 200 ms. The second core network element may split the fourth QoS parameter into the first QoS parameter and the third QoS parameter. Here, the first QoS parameter includes the PSDB, where PSDB = 50 ms; and the third QoS parameter includes the PSDB, where PSDB = 150 ms. The first QoS parameter and the third QoS parameter collectively satisfy the QoS requirement between the second terminal device (or the non-3GPP device) and the UPF. Thus, in the implementation, the core network may determine the first QoS parameter (for controlling the transmission quality of the data unit set on the communication link between the first terminal device and the second terminal device or the non-3GPP device) and the third QoS parameter (for controlling the transmission quality of the data unit set on the communication link between the first terminal device and the UPF). The first QoS parameter and the third QoS parameter collectively satisfy the QoS requirement between the second terminal device or non-3GPP device and the UPF (or the application server).

In some implementations, in addition to sending the first QoS parameter to the first core network element (e.g., the SMF), the second core network element (e.g., the PCF) may also send the third QoS parameter to the first core network element. The third QoS parameter may be used for controlling the transmission of the data unit set (e.g., the PDU set) on the second communication link. The second communication link referred to herein is the communication link between the first terminal device and the UPF, and the first communication link and the second communication link may collectively form the communication link between the second terminal device (or the non-3GPP device) and the UPF. After receiving the third QoS parameter, the first core network element may control the transmission of the data unit set on the second communication link based on the third QoS parameter.

It should be noted that, in the embodiment 2, the aforementioned first device may be the second core network element (e.g., the PCF), and the second device may be the first core network element (e.g., the SMF). In such case, the first message may be the message corresponding to the operation S1410. Alternatively, the aforementioned first device may be the first core network element (e.g., the SMF), and the second device may be the first terminal device. In such case, the first message may be the message corresponding to the operation S1420.

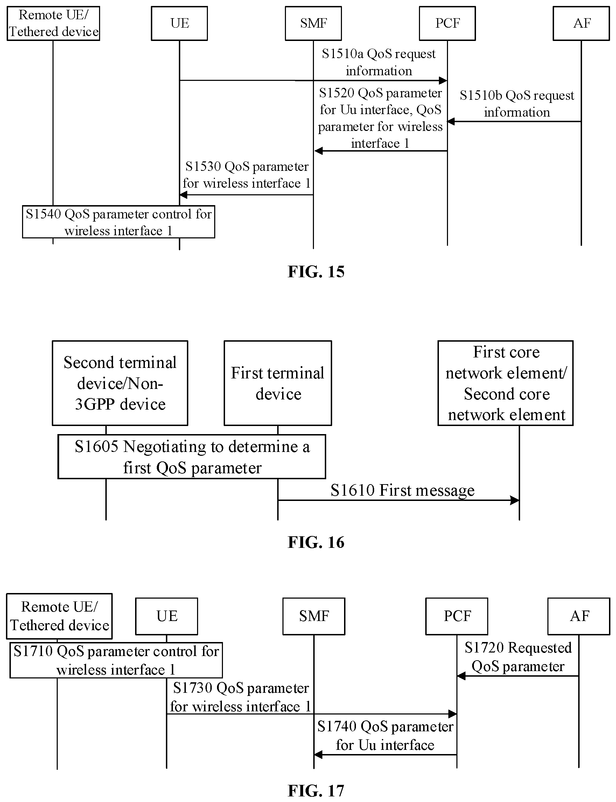

Hereinafter, the embodiments of the present disclosure are described in more detail with reference to specific examples. It should be noted that FIG. 15 may be applied to the aforementioned scenario shown in FIG. 5 or FIG. 6. In the example of FIG. 15, the UE corresponds to the first terminal device in the foregoing, the remote UE corresponds to the second terminal device in the foregoing, the tethered device corresponds to the non-3GPP device in the foregoing, the SMF corresponds to the first core network element in the foregoing, and the PCF corresponds to the second core network element in the foregoing. It should be understood that the example of FIG. 15 is merely intended to assist those skilled in the art in understanding the embodiments of the present disclosure, and is not intended to limit the embodiments of the present disclosure to specific numerical values or specific scenarios illustrated. It will be apparent to those skilled in the art that various equivalent modifications or variations may be made from the example given in FIG. 15, and such modifications or variations shall also fall within the scope of the embodiments of the present disclosure.

In the scenario shown in FIG. 15, the service data may be transmitted between the remote UE/tethered device and the application server. The transmission of the service data needs to pass through two wireless interfaces, namely, a wireless interface 1 (a PC5 or a non-3GPP interface, such as WiFi, etc.) between the remote UE/tethered device and the UE, and a Uu interface between the UE and the 3GPP network. Therefore, it is necessary to coordinate the QoS parameter on the two wireless interfaces, to collectively satisfy the service quality of the transmission between the remote UE/tethered device and the application server. In the embodiment, the core network elements may determine the QoS parameter for the Uu interface (in the example, the QoS parameter for the Uu interface and the QoS parameter between the UE and the UPF refer to the same parameter) and the QoS parameter for the wireless interface 1 between the remote UE/tethered device and the UE, respectively, and further send the QoS parameter for the wireless interface 1 (including the parameter for controlling the PDU set, such as the PSDB, PSER, etc.) to the UE as a relay, for the QoS control of the wireless interface 1.

At block S1510a, the UE may send QoS request information to the SMF located in the core network. The QoS request information represents a QoS requirement between the remote UE/tethered device and the application server. The QoS requirement includes a QoS parameter at the PDU set level, such as the PSDB, PSER, etc. For example, the QoS requirement includes the PSDB, where PSDB =200 ms. The UE may also provide information of the remote UE/tethered device corresponding to the QoS request information, for example, the identification information of the remote UE/tethered device, or the information indicating that the QoS request information is requested for the remote UE/tethered device. The above information may be carried in the session establishment request message or session modification request message. After receiving the QoS request information, the SMF may further send the information to the PCF.

At block S1510b, the AF may send QoS request information to the PCF. The QoS request information represents a QoS requirement between the remote UE/tethered device and the application server. The QoS requirement includes the QoS parameter at the PDU set level, such as the PSDB, PSER, etc. For example, the QoS requirement includes the PSDB, where PSDB =200 ms. The AF may further provide information of the remote UE/tethered device corresponding to the QoS request information, for example, the identification information of the remote UE/tethered device, or the information indicating that the QoS request information is requested for the remote UE/tethered device. The QoS request information sent by the AF may be directly sent to the PCF, or may be forwarded to the PCF through the NEF.

At block S1520, the PCF may determine, based on the acquired QoS request information, a QoS parameter 2 for the UE to access the 3GPP network via the Uu interface, that is, the QoS parameter between the UE and the UPF; and may determine a QoS parameter 1 between the remote UE/tethered device and the UE. These QoS parameters are the QoS parameters at the PDU set level, such as the PSDB, PSER, etc. For example, the PSDB in the QoS parameter 2 = 150 ms, and the PSDB in QoS parameter 1 = 50 ms. The two parts of the QoS parameters collectively satisfy the QoS requirement between the remote UE/tethered device and the application server. The PCF may send both two parts of the QoS parameters to the SMF.

At block S1530, the SMF may perform the QoS control on the data transmission between the UE and the UPF based on the QoS parameter 2. The SMF may send the QoS parameter 1 to the UE. The QoS parameter 1 may be included in the QoS rule and further delivered to the UE; or the QoS parameter 1 may be included in the QoS parameter of the QoS flow and further delivered to the UE. The QoS rule or the QoS parameter of the QoS flow are carried in the PDU session establishment complete message, the PDU session modification command, or the PDU session modification response message.

At block S1540, the UE may perform the QoS control on the wireless link between the UE and the remote UE/tethered device based on the received QoS parameter 1. If there is the remote UE, the interface between the UE and the remote UE may be the PC5 interface. In such case, the manner of the embodiment 1 may be adopted to perform the QoS control on the data on the PC5 link. If there is the tethered device, the non-3GPP protocol (e.g. WiFi, Bluetooth, etc.) may be used for the QoS control

In the embodiment, the core network may determine the QoS parameters on the two wireless interfaces, which causes that the QoS parameters collectively satisfy the transmission quality of the PDU set between the remote UE/tethered device and the application server. The core network may send, to the UE, the QoS parameter at the PDU set level (such as the PSDB, PSER, etc.) between the remote UE/tethered device and the UE, which causes that the UE and the remote UE/tethered device can schedule the radio resources based on the QoS parameters at the PDU set level, to ensure the communication quality of the direct communication link. In addition, the core network can ensure the communication quality of the Uu interface, which enables the transmission quality between the remote UE/tethered device and the application server to be satisfied.

### Embodiment 3

In the embodiment 3, the first terminal device corresponds to the first device in the foregoing, and the first core network element or the second core network element corresponds to the second device in the foregoing. Referring to FIG. 16, the first terminal device may send the first message to the first core network element or the second core network element (at block S1610). The first message includes the first QoS parameter (e.g., including the PSDB and/or PSER, etc.). The first QoS parameter may be used for controlling the transmission of the data unit set on the first communication link. The first communication link may be the communication link between the first terminal device and the second terminal device, or may be the communication link between the first terminal device and the non-3GPP device. The first message may be the session establishment request message or the session modification request message for the interaction between the first terminal device and the first core network element (SMF). After receiving the first QoS parameter, the first core network element may forward the first QoS parameter to the second core network element (PCF). Of course, the forwarding process of the first QoS parameter can also be understood as the process in which the first terminal device sends the first QoS parameter to the second core network element through the first core network element.

Before performing the operation S1610, the first terminal device may negotiate with the second terminal device or the non-3GPP device to determine the first QoS parameter (at block S1605). If the first QoS parameter is used for controlling the transmission of the data unit set on the communication link between the first terminal device and the second terminal device, the first terminal device may negotiate with the second terminal device to determine the first QoS parameter in the manner described in the embodiment 1. If the first QoS parameter is used for controlling the transmission of the data unit set on the communication link between the first terminal device and the non-3GPP device, the first terminal device may negotiate with the non-3GPP device to determine the first QoS parameter by using the non-3GPP protocol (e.g., the WiFi protocol).

In some implementations, the second core network element may receive a fifth message (not shown in FIG. 16). The fifth message is used to request the fourth QoS parameter, which is used for controlling the transmission of the data unit set on the third communication link. The third communication link includes the first communication link and the second communication link mentioned above. For example, the third communication link is the communication link between the second terminal device (or the non-3GPP device) and the UPF.

The embodiments of the present disclosure do not specifically limit the requester of the fourth QoS parameter. In some implementations, the fourth QoS parameter may be a QoS parameter requested by the AF. For example, the AF may directly request the fourth QoS parameter from the second core network element. Alternatively, the AF may request the fourth QoS parameter from the PCF through the NEF.

Alternatively, in some implementations, the fourth QoS parameter may be the QoS parameter requested by the first terminal device. For example, the first terminal device may request the fourth QoS parameter from the first core network element (e.g., the SMF) through the session establishment request message, and forward the fourth QoS parameter to the second core network element through the first core network element. For another example, the first terminal device may request the fourth QoS parameter from the first core network element (e.g., the SMF) through the session modification request message, and forward the fourth QoS parameter to the second core network element through the first core network element.

After receiving the fourth QoS parameter, in some implementations, the second core network element may determine the third QoS parameter based on the first QoS parameter and the fourth QoS parameter. The third QoS parameter is used for controlling the transmission of the data unit set on the second communication link. For example, if the first QoS parameter includes the PSDB, where PSDB = 50 ms, and the fourth QoS parameter includes the PSDB, where PSDB = 200 ms, the second network element may determine that the PSDB in the third QoS parameter = 150 ms. After determining the third QoS parameter, the second core network element may send the third QoS parameter to the first core network element, which can enable the first core network element to perform the QoS control on the transmission between the first terminal device and the UPF based on the third QoS parameter.

Hereinafter, the embodiments of the present disclosure are described in more detail with reference to specific examples. It should be noted that FIG. 17 may be applied to the scenario shown in FIG. 5 or FIG. 6 mentioned above. In the example of FIG. 17, the UE corresponds to the first terminal device in the foregoing, the remote UE corresponds to the second terminal device in the foregoing, the tethered device corresponds to the non-3GPP device in the foregoing, the SMF corresponds to the first core network element in the foregoing, and the PCF corresponds to the second core network element in the foregoing. It should be understood that the example of FIG. 17 is merely intended to assist those skilled in the art in understanding the embodiments of the present disclosure, and is not intended to limit the embodiments of the present disclosure to specific numerical values or specific scenarios illustrated. It will be apparent to those skilled in the art that various equivalent modifications or variations may be made from the example given in FIG. 17, and such modifications or variations shall also fall within the scope of the embodiments of the present disclosure.

Different from the manner shown in FIG. 15, in FIG. 17, the UE may determine the QoS parameter 1 (including the parameter for controlling the PDU set, such as the PSDB, PSER, etc.) of the wireless interface 1 (the PC5 interface or non-3GPP interface, such as WiFi, etc.) between the UE and the remote UE/tethered device by itself. If there is the remote UE, the UE and the remote UE may determine the QoS parameter 1 in the manner described in the embodiment 1. If there is the tethered device, the UE may interact with the tethered device through the non-3GPP protocol (e.g., WiFi, Bluetooth, etc.) to determine the QoS parameter 1. In the embodiment, the UE may send the QoS parameter 1 of the wireless interface 1 to the core network, for the core network to determine the QoS parameter 2 of the Uu interface (the QoS parameter 2 of the Uu interface can also be understood as the QoS parameter between the UE and the UPF), thus, the QoS parameter 1 and the QoS parameter 2 collectively satisfy the transmission quality between the remote UE/tethered device and the application server.

At block S1710, the UE may perform the QoS control on the wireless interface 1. The QoS control may be based on the QoS parameter 1. If there is the remote UE, the UE and the remote UE may determine the QoS parameter 1 in the manner described in the embodiment 1. If there is the tethered device, the UE may interact with the tethered device through the non-3GPP protocol (e.g., the WiFi, Bluetooth, etc.) to determine the QoS parameter 1.

At block S1720, the AF may send QoS request information to the PCF. The QoS request information represents the QoS requirement between the remote UE/tethered device and the application server. The QoS requirement includes the QoS parameter at the PDU set level, such as the PSDB, PSER, etc. For example, the QoS parameter includes the PSDB, where the PSDB = 200 ms. The AF may also provide information of the remote UE/tethered device corresponding to the QoS request information, such as the identification information of the remote UE/tethered device, or the information indicating that the QoS request information is requested for the remote UE/tethered device. The QoS request information sent by the AF may be sent directly to the PCF, or may be forwarded to the PCF through the NEF.

At block S1730, the UE may send the QoS parameter 1 (including the parameter for controlling the PDU set, such as the PSDB, PSER, etc.) of the wireless interface 1 (the PC5 interface or non-3GPP interface, such as the WiFi, etc.) to the SMF located in the core network. The QoS parameter 1 represents the QoS requirement between the remote UE/tethered device and the application server. For example, the QoS parameter includes the PSDB, where the PSDB = 50 ms. The above information may be carried in the session establishment request message or session modification request message. The SMF may further send the information to the PCF.

At block S1740, the PCF may determine the QoS parameter 2 for the UE to access the 3GPP network via the Uu interface based on the QoS request information obtained from the AF and the QoS parameter 1 obtained from the remote UE/tethered device. The QoS parameter 2 includes the QoS parameter at the PDU set level, such as the PSDB, PSER, etc. The PCF can ensure that the two parts of the QoS parameters collectively satisfy the QoS requirement between the remote UE/tethered device and the application server. The PCF may send the QoS parameter 2 to the SMF. The SMF may perform the QoS control on the data transmission between the UE and the UPF based on the QoS parameter 2.

Compared with the embodiment shown in FIG. 15, this embodiment provides more autonomous QoS control for the direct communication link between the remote UE/tethered device and the UE, and does not need to receive the QoS parameter for the direct communication link from the core network. Such manner is more conducive to flexible QoS control according to the condition of the direct communication link. In the embodiment, the QoS parameter for the Uu interface can be adjusted according to the QoS parameters between the remote UE/tethered device and the UE, thereby collectively satisfying the transmission quality between the remote UE/tethered device and the application server.

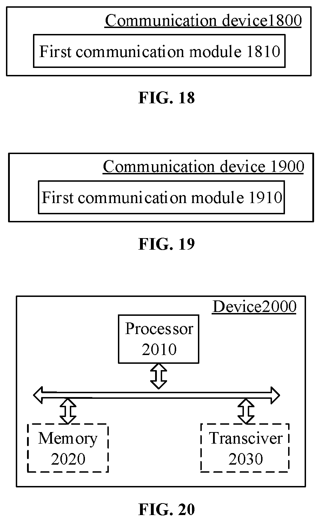

The method embodiments of the present disclosure are described in detail above with reference to FIGS. 1 to 17, and the apparatus embodiments of the present disclosure are described in detail below with reference to FIGS. 18 to 20. It should be understood that the descriptions of the method embodiments correspond to the descriptions of the apparatus embodiments. Therefore, for the portions not described in detail, reference may be made to the preceding method embodiments.

FIG. 18 shows a schematic structural diagram of a communication device according to an embodiment of the present disclosure. The communication device 1800 shown in FIG. 18 may be the first device described above. The communication device 1800 includes a first communication module 1810. The first communication module 1810 is configured to send a first message to a second device, the first message includes a first quality of service (QoS) parameter, and the first QoS parameter is used for controlling transmission of a data unit set on a first communication link. Herein, the first communication link is a direct communication link between a first terminal device and a second terminal device; or, the first communication link is a communication link between the first terminal device and a non-third generation partnership project (3GPP) device.

In some implementations, the first device is the first terminal device, the second device is the second terminal device, and the first communication link is the direct communication link.

In some implementations, the first message is a direct communication request message, a direct security mode complete message, or a link modification request message.

In some implementations, the communication device 1800 further includes a second communication module, and the second communication module is configured to receive, after sending the first message to the second device, a second message from the second device, where the second message includes a second QoS parameter acceptable to the second device, and the second QoS parameter is used for controlling the transmission of the data unit set on the direct communication link.

In some implementations, the second message is a direct communication accept message or a link modification accept message.

In some implementations, the first QoS parameter is a QoS parameter of a first QoS flow, and the first message further includes identification information of the first QoS flow.

In some implementations, the first device is a first core network element, and the second device is the first terminal device.

In some implementations, the communication device 1800 further includes a third communication module, the third communication module is configured to receive the first QoS parameter and/or a third QoS parameter from a second core network element, the third QoS parameter is used for controlling the transmission of the data unit set on a second communication link, and the second communication link is a communication link between the first terminal device and a user plane function (UPF).

In some implementations, the first device is a second core network element, and the second device is a first core network element.

In some implementations, the communication device 1800 further includes a fourth communication module, and the fourth communication module is configured to receive a third message, the third message is used for requesting a fourth QoS parameter, the fourth QoS parameter is used for controlling the transmission of the data unit set on a third communication link, the third communication link includes the first communication link and a second communication link, and the second communication link is a communication link between the first terminal device and a user plane function (UPF).

In some implementations, the third message further includes information of the second terminal device or the non-3GPP device.

In some implementations, the information of the second terminal device or the non-3GPP device includes one or more of the following: identification information of the second terminal device or the non-3GPP device; and, first indication information, used for indicating that the fourth QoS parameter is a QoS parameter requested for the second terminal device or the non-3GPP device.

In some implementations, the communication device 1800 further includes a fifth communication module, the fifth communication module is configured to determine the first QoS parameter and/or a third QoS parameter based on the fourth QoS parameter, and the third QoS parameter is used for controlling the transmission of the data unit set on the second communication link.

In some implementations, the fourth QoS parameter is a QoS parameter requested by the first terminal device or an application function (AF).

In some implementations, the first QoS parameter is determined based on a third QoS parameter and/or a fourth QoS parameter, the third QoS parameter is used for controlling the transmission of the data unit set on a second communication link, the fourth QoS parameter is used for controlling the transmission of the data unit set on a third communication link, the second communication link is a communication link between the first terminal device and a user plane function (UPF), and the third communication link includes the first communication link and the second communication link.

In some implementations, the first device is the first terminal device, and the second device is a first core network element or a second core network element.

In some implementations, the communication device 1800 further includes a sixth communication module, and the sixth communication module is configured to, before sending the first message to the second device, negotiate with the second terminal device or the non-3GPP device to determine the first QoS parameter.

In some implementations, the first QoS parameter is used for determining a third QoS parameter, the third QoS parameter is used for controlling the transmission of the data unit set on a second communication link, and the second communication link is a communication link between the first terminal device and a user plane function (UPF).

In some implementations, the first core network element is a session management function (SMF).

In some implementations, the second core network element is a policy control function (PCF).

In some implementations, the data unit set is a protocol data unit (PDU) set.

In some implementations, the first QoS parameter includes a protocol data unit (PDU) set delay budget (PSDB) and/or a PDU set error rate (PSER).

FIG. 19 shows a schematic structural diagram of a communication device according to an embodiment of the present disclosure. The communication device 1900 shown in FIG. 19 may be the second device described above. The communication device 1900 includes a first communication module 1910. The first communication module 1910 is configured to receive a first message from a first device, the first message includes a first quality of service (QoS) parameter, and the first QoS parameter is used for controlling transmission of a data unit set on a first communication link. Herein, the first communication link is a direct communication link between a first terminal device and a second terminal device; or, the first communication link is a communication link between the first terminal device and a non-third generation partnership project (3GPP) device.

In some implementations, the first device is the first terminal device, the second device is the second terminal device, and the first communication link is the direct communication link.

In some implementations, the first message is a direct communication request message, a direct security mode complete message, or a link modification request message.

In some implementations, the communication device 1900 further includes a second communication module, the second communication module is configured to, after receiving the first message from the first device, send a second message to the first device, the second message includes a second QoS parameter acceptable to the second device, and the second QoS parameter is used for controlling the transmission of the data unit set on the direct communication link.

In some implementations, the second message is a direct communication accept message or a link modification accept message.

In some implementations, the first QoS parameter is a QoS parameter of a first QoS flow, and the first message further includes identification information of the first QoS flow.

In some implementations, the first device is a first core network element, and the second device is the first terminal device.

In some implementations, the communication device 1900 further includes a third communication module, the third communication module is configured to control the transmission of the data unit set on the first communication link based on the first QoS parameter.

In some implementations, the communication device 1900 further includes a fourth communication module, and the fourth communication module is configured to send a third message to the first core network element or a second core network element, the third message is used for requesting a fourth QoS parameter, the fourth QoS parameter is used for controlling the transmission of the data unit set on a third communication link, the third communication link includes the first communication link and a second communication link, and the second communication link is a communication link between the first terminal device and a user plane function (UPF).

In some implementations, the first device is a second core network element, and the second device is a first core network element.

In some implementations, the communication device 1900 further includes a fifth communication module, and the fifth communication module is configured to send a fourth message to the first terminal device, the fourth message includes the first QoS parameter.

In some implementations, the first QoS parameter is determined based on a third QoS parameter and/or a fourth QoS parameter, the third QoS parameter is used for controlling the transmission of the data unit set on a second communication link, the fourth QoS parameter is used for controlling the transmission of the data unit set on a third communication link, the second communication link is a communication link between the first terminal device and a user plane function (UPF), and the third communication link includes the first communication link and the second communication link.

In some implementations, the first device is the first terminal device, and the second device is a first core network element or a second core network element.

In some implementations, the communication device 1900 further includes a sixth communication module, the sixth communication module is configured to receive a fifth message, the fifth message is used for requesting a fourth QoS parameter, the fourth QoS parameter is used for controlling the transmission of the data unit set on a third communication link, the third communication link includes the first communication link and a second communication link, and the second communication link is a communication link between the first terminal device and and a user plane function (UPF).

In some implementations, the fifth message further includes information of the second terminal device or the non-3GPP device.

In some implementations, the information of the second terminal device or the non-3GPP device includes one or more of the following: identification information of the second terminal device or the non-3GPP device; and, first indication information, used for indicating that the fourth QoS parameter is a QoS parameter requested for the second terminal device or the non-3GPP device.

In some implementations, the communication device 1900 further includes a seventh communication module, the seventh communication module is configured to determine a third QoS parameter based on the first QoS parameter and the fourth QoS parameter, and the third QoS parameter is used for controlling the transmission of the data unit set on the second communication link.

In some implementations, the fourth QoS parameter is a QoS parameter requested by the first terminal device or an application function (AF).

In some implementations, the first core network element is a session management function (SMF).

In some implementations, the second core network element is a policy control function (PCF).

In some implementations, the data unit set is a protocol data unit (PDU) set.

In some implementations, the first QoS parameter includes a protocol data unit (PDU) set delay budget (PSDB) and/or a PDU set error rate (PSER).

FIG. 20 shows a schematic structural diagram of a communication device to which an embodiment of the present disclosure is applicable. The dashed line in FIG. 20 indicates that the unit or module is optional. The device 2000 may be used to implement the methods described in the method embodiments described above. The device 2000 may be a chip, a terminal device, or a network device.

The device 2000 may include one or more processors 2010. The processor 2010 may enable the device 2000 to implement each of the methods described in the preceding method embodiments. The processor 2010 may be a general-purpose processor or a special-purpose processor. For example, the processor may be a central processing unit (CPU). Alternatively, the processor may be another general purpose processor, a digital signal processor (DSP), an application specific integrated circuit (ASIC), a field programmable gate array (FPGA) or other programmable logic device, a discrete gate or transistor logic device, a discrete hardware component, or the like. The general-purpose processor may be a microprocessor or the processor may be any conventional processor or the like.

The device 2000 may also include one or more memories 2020. The memory 2020 stores a program which is executable by the processor 2010, enabling the device 2000 to perform each of the methods described in the above method embodiments. The memory 1420 may be independent of the processor 2010 or may be integrated in the processor 2010.

The device 2000 may also include a transceiver 2030. The processor 2010 may communicate with other devices or chips through the transceiver 2030. For example, the processor 2010 may transmit and receive data with other devices or chips through the transceiver 2030.

The embodiments of the present disclosure also provide a computer-readable storage medium, and the computer-readable storage medium is configured to store a program. The computer-readable storage medium may be applied to the first device or the second device provided by the embodiments of the present disclosure, and the program enables the computer to perform each of the methods performed by the first device or the second device in the various embodiments of the present disclosure.

The embodiments of the present disclosure also provide a computer program product. The computer program product includes a program. The computer program product may be applied to the first device or the second device provided by the embodiments of the present disclosure, and the program enables a computer to perform each of the methods performed by the first device or the second device in various embodiments of the present disclosure.

The embodiments of the present disclosure also provide a computer program. The computer program may be applied to the first device or the second device provided by the embodiments of the present disclosure, and the computer program enables a computer to perform each of the methods performed by the first device or the second device in the various embodiments of the present disclosure.

It should be understood that the terms "system" and "network" may be used interchangeably in the present disclosure. In addition, the terminology used in the present disclosure is only used to explain specific embodiments of the present disclosure, and is not intended to limit the present disclosure. The terms "first", "second", "third", and "fourth", and the like in the specification and claims of the present disclosure and the accompanying drawings are used to distinguish different objects and are not used to describe a particular order. Furthermore, the terms "including" and "having" and any variations thereof are intended to cover a non-exclusive inclusion.

In the embodiments of the present disclosure, the "indication" may be a direct indication, an indirect indication, or an indication that there is an association relationship. By way of example, A indicates B, which may mean that A directly indicates B, e.g., B may be acquired by A; it may also be indicated that A indirectly indicates B, for example, A indicates C, and B can be acquired by C; moreover, it can also be indicated that there is an association relationship between A and B.

In the embodiments of the present disclosure, "B corresponding to A" means that B is associated with A, and B can be determined from A. However, it should also be understood that determining B from A does not mean determining B from A alone, but B may also be determined from A and/or other information.

In the embodiments of the present disclosure, the term "correspondence" may mean that there is a direct correspondence or an indirect correspondence between the two objects, or may mean that there is a correlation between the two objects, or may be a relationship between instruction and being instructed, configuration and being configured, or the like.

In the embodiments of the present disclosure, "pre-definition" or "pre-configuration" can be realized by pre-storing corresponding codes, tables, or other ways that can be used to indicate relevant information in a device (for example, including a terminal device and a network device), and the specific implementation thereof is not limited in the present disclosure. For example, predefining may refer to be efined in a protocol.

In the embodiments of the present disclosure, the "protocol" may refer to a standard protocol in the communication field, and may include, for example, an LTE protocol, an NR protocol, and related protocols applied to future communication systems, and the present disclosure is not limited thereto.

The term "and/or" in the embodiments of the present disclosure is merely an association relationship describing the associated object, indicating that there may be three kinds of relationships, for example, A and/or B, which may mean that A exists alone, A and B exists at the same time, and B exists alone. In addition, the character "/" herein generally indicates that the associated objects before and after are in an "or" relationship.

In various embodiments of the present disclosure, the size of the sequence numbers of the aforementioned processes does not mean the order of the execution order, and the execution order of each process should be determined by its function and internal logic, and should not constitute any limitation on the implementation process of the embodiments of the present disclosure.

In the several embodiments provided herein, it should be understood that the disclosed systems, apparatuses, and methods may be implemented in other ways. For example, the device embodiments described above are merely illustrative. For example, the division of units is merely a logical function division, and there may be other division methods in actual implementation. For example, multiple units or components may be combined or integrated into another system, or some features may be ignored or not implemented. Alternatively, the coupling or direct coupling or communication connection with each other shown or discussed may be through some interface, indirect coupling or communication connection of devices or units may be in electrical, mechanical or other form.

The units described as separate components may or may not be physically separated, and the components shown as units may or may not be physical units, that is, may be located in one place, or may be distributed over multiple network units. Some or all of the units may be selected according to actual needs to achieve the purpose of the technical solutions of the embodiments.

In addition, each functional unit in each embodiment of the present disclosure may be integrated in one processing unit, each unit may physically exist alone, or two or more units may be integrated in one unit.

In the foregoing embodiments, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, processes or functions according to the embodiments of the present disclosure are generated in whole or in part. The computer may be a general-purpose computer, a special-purpose computer, a computer network, or other programmable device. The computer instructions may be stored in a computer-readable storage medium or transmitted from one computer-readable storage medium to another computer-readable storage medium, for example, the computer instructions may be transmitted from one website site, computer, server, or data center to another website site, computer, server, or data center via wired (e.g., coaxial cable, fiber optic, digital subscriber line (DSL)) or wireless (e.g., infrared, wireless, microwave, etc.). The computer-readable storage medium may be any available medium that can be read by a computer or a data storage device such as a server, a data center, or the like that incorporates one or more available media integrations. The available medium may be a magnetic medium (e.g., a floppy disk, a hard disk, a magnetic tape), an optical medium (e.g., a digital video disc (DVD)), or a semiconductor medium (e.g., a solid state disk (SSD)), or the like.

The foregoing descriptions are merely specific implementations of the present disclosure, but are not intended to limit the scope of protection of the present disclosure. Any variation or replacement readily figured out by those skilled in the art within the technical scope disclosed in the present disclosure shall fall within the scope of protection of the present disclosure. Therefore, the scope of protection of the present disclosure shall be subject to the scope of protection of the claims.

## Claims

1. A wireless communication method, comprising:
sending, by a first device, a first message to a second device, the first message comprising a first quality of service (QoS) parameter, and the first QoS parameter being used for controlling transmission of a data unit set on a first communication link;
wherein the first communication link is a direct communication link between a first terminal device and a second terminal device; or, the first communication link is a communication link between the first terminal device and a non-third generation partnership project (3GPP) device.

2. The method of claim 1, wherein the first device is the first terminal device, the second device is the second terminal device, and the first communication link is the direct communication link.

3. The method of claim 2, wherein the first message is a direct communication request message, a direct security mode complete message, or a link modification request message.

4. The method of claim 2 or 3, wherein after sending, by the first device, the first message to the second device, the method further comprises:
receiving, by the first device, a second message from the second device, the second message comprising a second QoS parameter acceptable to the second device, and the second QoS parameter being used for controlling the transmission of the data unit set on the direct communication link.

5. The method of claim 4, wherein the second message is a direct communication accept message or a link modification accept message.

6. The method of any one of claims 2 to 5, wherein the first QoS parameter is a QoS parameter of a first QoS flow, and the first message further comprises identification information of the first QoS flow.

7. The method of claim 1, wherein the first device is a first core network element, and the second device is the first terminal device.

8. The method of claim 7, further comprising:
receiving, by the first device, the first QoS parameter and/or a third QoS parameter from a second core network element, the third QoS parameter being used for controlling the transmission of the data unit set on a second communication link, and the second communication link being a communication link between the first terminal device and a user plane function (UPF).

9. The method of claim 1, wherein the first device is a second core network element, and the second device is a first core network element.

10. The method of claim 9, further comprising:
receiving, by the first device, a third message, the third message being used for requesting a fourth QoS parameter, the fourth QoS parameter being used for controlling the transmission of the data unit set on a third communication link, the third communication link comprising the first communication link and a second communication link, and the second communication link being a communication link between the first terminal device and a user plane function (UPF).

11. The method of claim 10, wherein the third message further comprises information of the second terminal device or the non-3GPP device.

12. The method of claim 11, wherein the information of the second terminal device or the non-3GPP device comprises one or more of the following:
identification information of the second terminal device or the non-3GPP device;
first indication information, used for indicating that the fourth QoS parameter is a QoS parameter requested for the second terminal device or the non-3GPP device.

13. The method of any one of claims 10 to 12, further comprising:
determining, by the first device, the first QoS parameter and/or a third QoS parameter based on the fourth QoS parameter, the third QoS parameter being used for controlling the transmission of the data unit set on the second communication link.

14. The method of any one of claims 10 to 13, wherein the fourth QoS parameter is a QoS parameter requested by the first terminal device or an application function (AF).

15. The method of any one of claims 9 to 14, wherein the first QoS parameter is determined based on a third QoS parameter and/or a fourth QoS parameter, the third QoS parameter is used for controlling the transmission of the data unit set on a second communication link, the fourth QoS parameter is used for controlling the transmission of the data unit set on a third communication link, the second communication link is a communication link between the first terminal device and a user plane function (UPF), and the third communication link comprises the first communication link and the second communication link.

16. The method of claim 1, wherein the first device is the first terminal device, and the second device is a first core network element or a second core network element.

17. The method of claim 16, wherein before sending, by the first device, the first message to the second device, the method further comprises:
negotiating, by the first device, with the second terminal device or the non-3GPP device to determine the first QoS parameter.

18. The method of claim 16 or 17, wherein the first QoS parameter is used for determining a third QoS parameter, the third QoS parameter is used for controlling the transmission of the data unit set on a second communication link, and the second communication link is a communication link between the first terminal device and a user plane function (UPF).

19. The method of any one of claims 7 to 18, wherein the first core network element is a session management function (SMF).

20. The method of any one of claims 8 to 18, wherein the second core network element is a policy control function (PCF).

21. The method of any one of claims 1 to 20, wherein the data unit set is a protocol data unit (PDU) set.

22. The method of any one of claims 1 to 21, wherein the first QoS parameter comprises a protocol data unit (PDU) set delay budget (PSDB) and/or a PDU set error rate (PSER).

23. A wireless communication method, comprising:
receiving, by a second device, a first message from a first device, the first message comprising a first quality of service (QoS) parameter, and the first QoS parameter being used for controlling transmission of a data unit set on a first communication link;
wherein the first communication link is a direct communication link between a first terminal device and a second terminal device; or, the first communication link is a communication link between the first terminal device and a non-third generation partnership project (3GPP) device.

24. The method of claim 23, wherein the first device is the first terminal device, the second device is the second terminal device, and the first communication link is the direct communication link.

25. The method of claim 24, wherein the first message is a direct communication request message, a direct security mode complete message, or a link modification request message.

26. The method of claim 24 or 25, wherein after receiving, by the second device, the first message from the first device, the method further comprises:
sending, by the second device, a second message to the first device, the second message comprising a second QoS parameter acceptable to the second device, and the second QoS parameter being used for controlling the transmission of the data unit set on the direct communication link.

27. The method of claim 26, wherein the second message is a direct communication accept message or a link modification accept message.

28. The method of any one of claims 24 to 27, wherein the first QoS parameter is a QoS parameter of a first QoS flow, and the first message further comprises identification information of the first QoS flow.

29. The method of claim 23, wherein the first device is a first core network element, and the second device is the first terminal device.

30. The method of claim 29, further comprising:
controlling, by the second device, the transmission of the data unit set on the first communication link based on the first QoS parameter.

31. The method of claim 29 or 30, wherein before receiving, by the second device, the first message from the first device, the method further comprises:
sending, by the second device, a third message to the first core network element or a second core network element, the third message being used for requesting a fourth QoS parameter, the fourth QoS parameter being used for controlling the transmission of the data unit set on a third communication link, the third communication link comprising the first communication link and a second communication link, and the second communication link being a communication link between the first terminal device and a user plane function (UPF).

32. The method of claim 23, wherein the first device is a second core network element, and the second device is a first core network element.

33. The method of claim 32, further comprising:
sending, by the second device, a fourth message to the first terminal device, the fourth message comprising the first QoS parameter.

34. The method of any one of claims 29 to 33, wherein the first QoS parameter is determined based on a third QoS parameter and/or a fourth QoS parameter, the third QoS parameter is used for controlling the transmission of the data unit set on a second communication link, the fourth QoS parameter is used for controlling the transmission of the data unit set on a third communication link, the second communication link is a communication link between the first terminal device and a user plane function (UPF), and the third communication link comprises the first communication link and the second communication link.

35. The method of claim 23, wherein the first device is the first terminal device, and the second device is a first core network element or a second core network element.

36. The method of claim 35, further comprising:
receiving, by the second device, a fifth message, the fifth message being used for requesting a fourth QoS parameter, the fourth QoS parameter being used for controlling the transmission of the data unit set on a third communication link, the third communication link comprising the first communication link and a second communication link, and the second communication link being a communication link between the first terminal device and and a user plane function (UPF).

37. The method of claim 36, wherein the fifth message further comprises information of the second terminal device or the non-3GPP device.

38. The method of claim 37, wherein the information of the second terminal device or the non-3GPP device comprises one or more of the following:
identification information of the second terminal device or the non-3GPP device;
first indication information, used for indicating that the fourth QoS parameter is a QoS parameter requested for the second terminal device or the non-3GPP device.

39. The method of any one of claims 36 to 38, further comprising:
determining, by the second device, a third QoS parameter based on the first QoS parameter and the fourth QoS parameter, and the third QoS parameter being used for controlling the transmission of the data unit set on the second communication link.

40. The method of any one of claims 36 to 39, wherein the fourth QoS parameter is a QoS parameter requested by the first terminal device or an application function (AF).

41. The method of any one of claims 29 to 40, wherein the first core network element is a session management function (SMF).

42. The method of any one of claims 32 to 33 or 35 to 40, wherein the second core network element is a policy control function (PCF).

43. The method of any one of claims 23 to 42, wherein the data unit set is a protocol data unit (PDU) set.

44. The method of any one of claims 23 to 43, wherein the first QoS parameter comprises a protocol data unit (PDU) set delay budget (PSDB) and/or a PDU set error rate (PSER).

45. A communication device, wherein the communication device is a first device, and comprises:
a first communication module, configured to send a first message to a second device, the first message comprising a first quality of service (QoS) parameter, and the first QoS parameter being used for controlling transmission of a data unit set on a first communication link;
wherein the first communication link is a direct communication link between a first terminal device and a second terminal device; or, the first communication link is a communication link between the first terminal device and a non-third generation partnership project (3GPP) device.

46. The communication device of claim 45, wherein the first device is the first terminal device, the second device is the second terminal device, and the first communication link is the direct communication link.

47. The communication device of claim 46, wherein the first message is a direct communication request message, a direct security mode complete message, or a link modification request message.

48. The communication device of claim 46 or 47, further comprising:
a second communication module, configured to receive, after sending the first message to the second device, a second message from the second device, the second message comprising a second QoS parameter acceptable to the second device, and the second QoS parameter being used for controlling the transmission of the data unit set on the direct communication link.

49. The communication device of claim 48, wherein the second message is a direct communication accept message or a link modification accept message.

50. The communication device of any one of claims 46 to 49, wherein the first QoS parameter is a QoS parameter of a first QoS flow, and the first message further comprises identification information of the first QoS flow.

51. The communication device of claim 45, wherein the first device is a first core network element, and the second device is the first terminal device.

52. The communication device of claim 51, further comprising:
a third communication module, configured to receive the first QoS parameter and/or a third QoS parameter from a second core network element, the third QoS parameter being used for controlling the transmission of the data unit set on a second communication link, and the second communication link being a communication link between the first terminal device and a user plane function (UPF).

53. The communication device of claim 45, wherein the first device is a second core network element, and the second device is a first core network element.

54. The communication device of claim 53, further comprising:
a fourth communication module, configured to receive a third message, the third message being used for requesting a fourth QoS parameter, the fourth QoS parameter being used for controlling the transmission of the data unit set on a third communication link, the third communication link comprising the first communication link and a second communication link, and the second communication link being a communication link between the first terminal device and a user plane function (UPF).

55. The communication device of claim 54, wherein the third message further comprises information of the second terminal device or the non-3GPP device.

56. The communication device of claim 55, wherein the information of the second terminal device or the non-3GPP device comprises one or more of the following:
identification information of the second terminal device or the non-3GPP device;
first indication information, used for indicating that the fourth QoS parameter is a QoS parameter requested for the second terminal device or the non-3GPP device.

57. The communication device of any one of claims 54 to 56, further comprising:
a fifth communication module, configured to determine the first QoS parameter and/or a third QoS parameter based on the fourth QoS parameter, the third QoS parameter being used for controlling the transmission of the data unit set on the second communication link.

58. The communication device of any one of claims 54 to 57, wherein the fourth QoS parameter is a QoS parameter requested by the first terminal device or an application function (AF).

59. The communication device of any one of claims 53 to 58, wherein the first QoS parameter is determined based on a third QoS parameter and/or a fourth QoS parameter, the third QoS parameter is used for controlling the transmission of the data unit set on a second communication link, the fourth QoS parameter is used for controlling the transmission of the data unit set on a third communication link, the second communication link is a communication link between the first terminal device and a user plane function (UPF), and the third communication link comprises the first communication link and the second communication link.

60. The communication device of claim 45, wherein the first device is the first terminal device, and the second device is a first core network element or a second core network element.

61. The communication device of claim 60, further comprising:
a sixth communication module, configured to, before sending the first message to the second device, negotiate with the second terminal device or the non-3GPP device to determine the first QoS parameter.

62. The communication device of claim 60 or 61, wherein the first QoS parameter is used for determining a third QoS parameter, the third QoS parameter is used for controlling the transmission of the data unit set on a second communication link, and the second communication link is a communication link between the first terminal device and a user plane function (UPF).

63. The communication device of any one of claims 51 to 62, wherein the first core network element is a session management function (SMF).

64. The communication device of any one of claims 52 to 62, wherein the second core network element is a policy control function (PCF).

65. The communication device of any one of claims 45 to 64, wherein the data unit set is a protocol data unit (PDU) set.

66. The communication device of any one of claims 45 to 65, wherein the first QoS parameter comprises a protocol data unit (PDU) set delay budget (PSDB) and/or a PDU set error rate (PSER).

67. A communication device, wherein the communication device is a second device, and comprises:
a first communication module, configured to receive a first message from a first device, the first message comprising a first quality of service (QoS) parameter, and the first QoS parameter being used for controlling transmission of a data unit set on a first communication link;
wherein the first communication link is a direct communication link between a first terminal device and a second terminal device; or, the first communication link is a communication link between the first terminal device and a non-third generation partnership project (3GPP) device.

68. The communication device of claim 67, wherein the first device is the first terminal device, the second device is the second terminal device, and the first communication link is the direct communication link.

69. The communication device of claim 68, wherein the first message is a direct communication request message, a direct security mode complete message, or a link modification request message.

70. The communication device of claim 68 or 69, further comprising:
a second communication module, configured to, after receiving the first message from the first device, send a second message to the first device, the second message comprising a second QoS parameter acceptable to the second device, and the second QoS parameter being used for controlling the transmission of the data unit set on the direct communication link.

71. The communication device of claim 70, wherein the second message is a direct communication accept message or a link modification accept message.

72. The communication device of any one of claims 68 to 71, wherein the first QoS parameter is a QoS parameter of a first QoS flow, and the first message further comprises identification information of the first QoS flow.

73. The communication device of claim 67, wherein the first device is a first core network element, and the second device is the first terminal device.

74. The communication device of claim 73, further comprising:
a third communication module, configured to control the transmission of the data unit set on the first communication link based on the first QoS parameter.

75. The communication device of claim 73 or 74, further comprising:
a fourth communication module, configured to send a third message to the first core network element or a second core network element, the third message being used for requesting a fourth QoS parameter, the fourth QoS parameter being used for controlling the transmission of the data unit set on a third communication link, the third communication link comprising the first communication link and a second communication link, and the second communication link being a communication link between the first terminal device and a user plane function (UPF).

76. The communication device of claim 67, wherein the first device is a second core network element, and the second device is a first core network element.

77. The communication device of claim 76, further comprising:
a fifth communication module, configured to send a fourth message to the first terminal device, the fourth message comprising the first QoS parameter.

78. The communication device of any one of claims 73 to 77, wherein the first QoS parameter is determined based on a third QoS parameter and/or a fourth QoS parameter, the third QoS parameter is used for controlling the transmission of the data unit set on a second communication link, the fourth QoS parameter is used for controlling the transmission of the data unit set on a third communication link, the second communication link is a communication link between the first terminal device and a user plane function (UPF), and the third communication link comprises the first communication link and the second communication link.

79. The communication device of claim 67, wherein the first device is the first terminal device, and the second device is a first core network element or a second core network element.

80. The communication device of claim 79, further comprising:
a sixth communication module, configured to receive a fifth message, the fifth message being used for requesting a fourth QoS parameter, the fourth QoS parameter being used for controlling the transmission of the data unit set on a third communication link, the third communication link comprising the first communication link and a second communication link, and the second communication link being a communication link between the first terminal device and and a user plane function (UPF).

81. The communication device of claim 80, wherein the fifth message further comprises information of the second terminal device or the non-3GPP device.

82. The communication device of claim 81, wherein the information of the second terminal device or the non-3GPP device comprises one or more of the following:
identification information of the second terminal device or the non-3GPP device;
first indication information, used for indicating that the fourth QoS parameter is a QoS parameter requested for the second terminal device or the non-3GPP device.

83. The communication device of any one of claims 80 to 82, further comprising:
a seventh communication module, configured to determine a third QoS parameter based on the first QoS parameter and the fourth QoS parameter, and the third QoS parameter being used for controlling the transmission of the data unit set on the second communication link.

84. The communication device of any one of claims 80 to 83, wherein the fourth QoS parameter is a QoS parameter requested by the first terminal device or an application function (AF).

85. The communication device of any one of claims 73 to 84, wherein the first core network element is a session management function (SMF).

86. The communication device of any one of claims 76 to 77 or 79 to 84, wherein the second core network element is a policy control function (PCF).

87. The communication device of any one of claims 67 to 86, wherein the data unit set is a protocol data unit (PDU) set.

88. The communication device of any one of claims 67 to 87, wherein the first QoS parameter comprises a protocol data unit (PDU) set delay budget (PSDB) and/or a PDU set error rate (PSER).

89. A communication device, comprising a transceiver, a memory, and a processor, wherein the memory is configured to store a program therein, and the processor is configured to call and run the program in the memory and control the transceiver to receive or transmit a signal to enable the communication device to implement the method of any one of claims 1 to 22 or the method of any one of claims 23 to 44.

90. A device, comprising a processor, wherein the processor is configured to call and run a program from a memory, to enable the device to implement the method of any one of claims 1 to 22 or the method of any one of claims 23 to 44.

91. A chip, comprising a processor, wherein the processor is configured to call and run a program from a memory, to enable a device installed with the chip to implement the method of any one of claims 1 to 22 or the method of any one of claims 23 to 44.

92. A computer-readable storage medium, having stored a program thereon, wherein the program enables a computer to implement the method of any one of claims 1 to 22 or the method of any one of claims 23 to 44.

93. A computer program product, comprising a program, wherein the program enables a computer to implement the method of any one of claims 1 to 22 or the method of any one of claims 23 to 44.

94. A computer program, wherein the computer program enables a computer to implement the method of any one of claims 1 to 22 or the method of any one of claims 23 to 44.
